# FASCICULE DE BREVET EUROPEEN

(11) **EP 0 437 394 B1**
(45) Date de publication et mention de la délivrance du brevet: **22.06.1994**
(21) Numéro de dépôt: 91400033.6
(22) Date de dépôt: 09.01.1991
(51) Int. Cl.: B01F 13/08, G21C 19/46, B01D 11/04

(54) **Ensemble de commande d'agitateur, notamment pour un mélangeur-décanteur équipant une installation de retraitement de combustible nucléaire**
Rührerantreibungseinheit, insbesondere ein MischerDekantierapparat zur Verwendung in einer Vorrichtung zur Wiederaufarbeitung von Kernbrennstoffen
Agitator-drive unit, especially for a device for the reprocessing of irradiated fuel by means of a mixer-setler equipment

(30) Priorité: 11.01.1990 FR 9000278
(43) Date de publication de la demande: 17.07.1991
(73) Titulaire: SOCIETE GENERALE POUR LES TECHNIQUES NOUVELLES S.G.N., 78182 Saint-Quentin-en-Yvelines Cédex (FR)
(72) Inventeur: Guilloteau, René, F-91370 Verrieres Le Buisson (FR)
(74) Mandataire: Poulin, Gérard

(56) Documents cités:
- FR-A- 2 361 768
- GB-A- 2 181 660

## Description

L'invention concerne un ensemble permettant de commander un agitateur de liquide radioactif.

Dans les installations de retraitement du combustible nucléaire irradié, on utilise des appareils appelés "mélangeur-décanteur", afin de procéder à la répartition, puis à l'extraction sélective des radioéléments contenus dans une phase aqueuse nitrique qui a servi au préalable à la dissolution du combustible.

Comme l'illustre notamment le document FR-A-2 055 947, un mélangeur-décanteur comprend habituellement, en dessous d'une dalle de protection biologique horizontale, une série d'étages identiques disposés côte à côte et comportant chacun un mélangeur et un décanteur. Chaque étage est monté dans une cuve fermée par un couvercle et la dalle de protection biologique comporte elle-même un couvercle amovible à la verticale de chacune des cuves. La phase aqueuse nitrique pénètre dans chacune des cuves à une extrémité, tandis qu'un solvant organique pénètre à l'extrémité opposée, de façon à créer une circulation à contre-courant.

Dans chaque mélangeur, le mélange des liquides est assuré par un agitateur dont la conception doit tenir compte de l'environnement particulièrement sévère dans lequel il se trouve.

Ainsi, la très forte activité des déchets traités complique les interventions, ce qui implique l'utilisation d'un agitateur résistant à l'irradiation et dont le fonctionnement soit fiable.

Par ailleurs, les solutions d'acide nitrique chaudes traitées dans les mélangeurs-décanteurs sont fortement corrosives, qu'elles soient en phase liquide ou en phase vapeur. L'agitateur doit donc pouvoir résister à la corrosion.

De plus, lorsqu'une intervention doit être effectuée, il est indispensable que l'agitateur puisse être monté et démonté à distance par télémanipulation. Dans ce cas, l'agitateur doit pouvoir être traité comme déchet de haute activité sans trop de difficultés.

Dans les agitateurs utilisés jusqu'à présent, ces différents problèmes n'ont jamais été résolus dans leur totalité de façon satisfaisante. En particulier, la protection contre la corrosion est souvent médiocre et conduit à remplacer la totalité de l'agitateur. En plus des problèmes de coût du matériel à remplacer, le poids et l'encombrement du déchet très contaminant et très irradiant qui doit alors être traité sont particulièrement pénalisants.

Dans le cas d'un agitateur d'axe horizontal, le document GB-A-2 181 660 prévoit d'utiliser un arbre d'entraînement en deux parties, reliées entre elles par un accouplement magnétique. Une cloison en forme de cloche, fixée sur la cuve, est placée entre les deux parties de l'accouplement. Cependant, une intervention à distance n'est pratiquement pas possible, car l'accès à l'agitateur nécessite de démonter successivement trois séries de vis situées sur le couvercle de la cuve.

L'invention a précisément pour objet un ensemble de commande d'un agitateur, de type nouveau, permettant de résoudre simultanément les différents problèmes énoncés précédemment, c'est-à-dire qui soit fiable, résistant à la corrosion et à l'irradiation, montable et démontable à distance, et apte à être traité relativement facilement comme déchet de haute activité.

Conformément à l'invention, ce résultat est obtenu au moyen d'un ensemble de commande d'un agitateur apte à être monté dans une ouverture circulaire d'une cuve contenant un liquide radioactif, cet ensemble comprenant un moteur entraînant en rotation l'agitateur par l'intermédiaire d'un arbre d'entraînement comportant une partie menante et une partie menée reliées par un accouplement magnétique, une cloison étanche montée sur la cuve étant interposée entre un organe magnétique menant et un organe magnétique mené de l'accouplement magnétique, caractérisé par le fait que, l'ouverture circulaire ayant un axe vertical, la cloison étanche constitue la partie supérieure d'un boîtier étanche dont un corps inférieur tubulaire repose par simple gravité, de façon étanche, dans ladite ouverture et supporte la partie menée de l'arbre d'entraînement par l'intermédiaire d'un palier, de telle sorte qu'après un enlèvement du moteur portant la partie menante de l'arbre d'entraînement, le boîtier étanche, supportant la partie menante et l'agitateur, peut être extrait par simple soulèvement, au travers de l'ouverture circulaire de la cuve.

Dans cet ensemble, la protection contre la corrosion est assurée par la barrière étanche formée par la cuve et par le boîtier étanche, cette barrière isolant l'atmosphère hostile du mélangeur-décanteur de l'atmosphère contenue dans le reste de l'installation. De plus, la réalisation de l'arbre d'entraînement en deux parties, le montage de la partie menée portant l'agitateur dans le boîtier étanche et le supportage de ce boîtier par simple gravité, sans fixation, facilitent le montage et le démontage et limitent le poids et l'encombrement des déchets de très haute activité.

Avantageusement, des moyens sont prévus pour empêcher une rotation du boîtier étanche dans ladite ouverture.

Avantageusement, l'ouverture circulaire est formée dans une partie tubulaire de la cuve qui fait saillie vers le bas jusqu'en dessous d'un niveau du liquide radioactif contenu dans la cuve, ledit palier étant un palier lisse lubrifié par ledit liquide, qui circule de bas en haut dans au moins une rainure hélicoïdale formée de part et d'autre du niveau à la surface de la partie menée de l'arbre d'entraînement.

Dans ce cas, la rainure hélicoïdale débouche à son extrémité supérieure dans un espace annulaire formé entre la partie menée de l'arbre et le corps inférieur tubulaire du boîtier étanche, ledit espace annulaire communiquant avec la cuve par des passages formés dans le corps inférieur tubulaire du boîtier et dans la partie tubulaire de la cuve, en dessous de moyens d'étanchéité prévus entre le corps et la partie tubulaire.

Dans un mode de réalisation préféré de l'invention, la partie menante de l'arbre d'entraînement est montée rotative dans un fourreau lié à un couvercle-centreur reçu dans une virole de centrage qui fait saillie au-dessus de la cuve, autour de l'arbre d'entraînement.

Un mode de réalisation préféré de l'invention va à présent être décrit, à titre d'exemple non limitatif, en se référant aux dessins annexés, dans lesquels :
- la figure 1 est une vue en coupe verticale, qui représente de façon schématique un ensemble de commande d'un agitateur équipant l'un des étages d'un mélangeur-décanteur; et
- la figure 2 est une vue en coupe illustrant à plus grande échelle l'ensemble de commande de la figure 1.

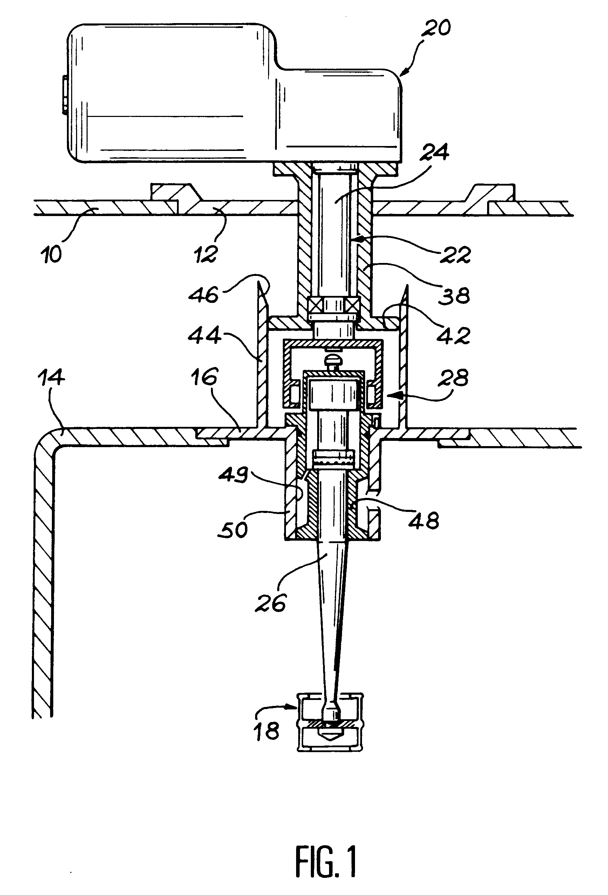

Sur la figure 1, la référence 10 désigne une partie d'une dalle horizontale de protection biologique, placé au-dessus d'un mélangeur-décanteur, dans une installation de retraitement de combustible nucléaire. Au droit de chacun des étages du mélangeur-décanteur, cette dalle 10 est équipée d'un couvercle 12.

On a également représenté sur la figure 1, en-dessous du couvercle 12 apparaissant sur cette figure, une partie de la cuve 14 contenant l'un des étages du mélangeur-décanteur. Cett cuve 14 est obturée par un couvercle horizontal 16 placé en-dessous du couvercle 12 de la dalle 10.

Dans la partie "mélangeur" de l'étage représenté, un agitateur 18 constitué par une turbine mélangeuse d'axe vertical, est placé à l'intérieur de la cuve 14. La commande de cet agitateur est assurée par un ensemble comportant un moteur 20 et un arbre d'entraînement vertical 22.

Dans le mode de réalisation représenté sur la figure 1, le moteur 20 est placé au-dessus de la dalle 10 de protection biologique, de sorte que l'arbre d'entraînement 22, dont les extrémités sont raccordées respectivement sur le moteur 20 et sur l'agitateur 18, traverse successivement les couvercles 12 et 16.

Dans un autre mode de réalisation, non représenté, le moteur est placé en-dessous de la dalle 10. L'arbre 22 ne traverse alors que le couvercle 16 de la cuve 14.

Conformément à l'invention, l'arbre d'entraînement 22 est réalisé en deux parties constituées par une partie supérieure menante 24, dont l'extrémité supérieure est raccordée sur le moteur 20, et une partie inférieure menée 26, dont l'extrémité inférieure porte l'agitateur 18. La partie menante 24 entraîne en rotation la partie menée 26 par l'intermédiaire d'un accouplement magnétique 28.

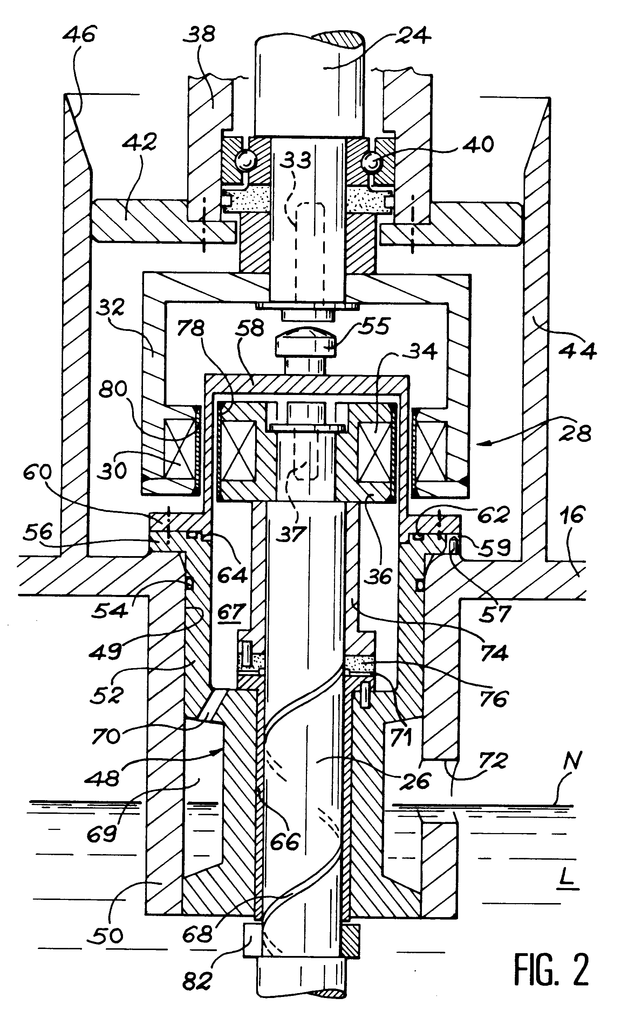

Comme l'illustre plus précisément la figure 2, cet accouplement magnétique 28 comprend un organe magnétique menant constitué par un aimant annulaire 30 monté dans une pièce 32 en forme de cloche fixée par une vis 33 à l'extrémité inférieure de la partie menante 24 de l'arbre d'entraînement 22. L'accouplement magnétique 28 comprend de plus un organe magnétique mené constitué par un aimant annulaire 34 monté à la périphérie d'une pièce massive 36 fixée par une vis 37 à l'extrémité supérieure de la partie menée 26 de l'arbre d'entraînement. L'agencement relatif entre les aimants 30 et 34 est tel que l'aimant 34 est logé à l'intérieur de l'aimant 30 et définit avec ce dernier un jeu annulaire.

La partie supérieure menante 24 de l'arbre d'entraînement 22 est supportée de façon tournante par un fourreau 38 fixé au moteur 20 et traversant de façon étanche le couvercle 12 de la paroi de protection biologique 10. A cet effet, des paliers tels que des roulements à billes étanches, dont l'un est représenté en 40 sur la figure 2, sont placés entre le fourreau 38 et la partie menante 24 de l'arbre d'entraînement.

L'alignement de la partie supérieure menante 24 par rapport à la partie inférieure menée 26 est obtenu au moyen d'un couvercle-centreur constitué par un disque horizontal 42 fixé à l'extrémité inférieure du fourreau 38.

Ce couvercle-centreur est reçu dans une virole de centrage 44 qui fait saillie sur la face supérieure du couvercle 16 de la cuve 14, coaxialement à l'arbre d'entraînement 22. La surface intérieure de la virole 44 comporte à son extrémité supérieure une partie tronconique 46 qui assure le centrage automatique du sous-ensemble constitué par le moteur 20, la partie menante 24 de l'arbre d'entraînement, le fourreau 38 et le couvercle-centreur, lorsque ce sous-ensemble est mis en place.

La partie inférieure 26 de l'arbre d'entraînement 22 est supportée de façon tournante dans un boîtier étanche 48 qui est lui-même positionné et supporté par le couvercle 16 de la cuve 14.

De façon plus précise, le couvercle 16 de la cuve 14 présente une ouverture circulaire 49 disposée coaxialement autour de l'arbre d'entraînement 22 et délimitée par une partie tubulaire 50 qui fait saillie vers le bas à partir du couvercle 16, de façon à plonger en dessous du niveau N de liquide radioactif contenu dans la cuve. Dans cette partie tubulaire 50 est emboîté un corps tubulaire 52 constituant la partie inférieure du boîtier étanche 48. Un joint d'étanchéité 54, par exemple de forme torique, est interposé entre le corps tubulaire 52 et la partie tubulaire 50, à proximité de leurs extrémités supérieures.

L'extrémité supérieure du corps tubulaire 52 comprend une bride ou collerette 56 qui prend appui sur une portée ménagée à cet effet sur le couvercle 16, autour de l'ouverture 49 délimitée par la partie tubulaire 50. De cette manière, le boîtier étanche 48 est positionné et centré par gravité sur le couvercle 16 de la cuve 14, sans aucune fixation.

Il est à noter que la structure de l'agitateur 18 est choisie afin que sa rotation n'engendre pas un effort axial vers le haut supérieur à la force de gravité qui maintient en place le boîtier étanche 48. Par sécurité on choisira de préférence un agitateur n'engendrant aucun effort axial vers le haut.

Comme le montre schématiquement la figure 2, des moyens sont prévus pour interdire toute rotation du boîtier étanche 48 par rapport au couvercle 16 de la cuve, afin d'éviter que ce boîtier ne soit entraîné en rotation par la partie menée 26 de l'arbre 22. Dans l'exemple représenté, ces moyens comprennent un doigt 57 qui fait saillie sur la face supérieure du couvercle 16, de façon à pénétrer dans une encoche 59 formée dans la bride 56.

Le boîtier étanche 48 comprend de plus, dans sa partie supérieure, une cloison étanche et amovible 58, en forme de cloche, qui coiffe la pièce massive 36 sur laquelle est monté l'aimant 34. Plus précisément, la cloison 58 comporte une paroi tubulaire qui est placée dans le jeu annulaire formé entre les aimants 30 et 34.

A son extrémité inférieure, la cloison 58 comporte une bride ou collerette 60 qui repose par gravité sur la bride 56 du corps tubulaire 52 du boîtier étanche, de façon à comprimer entre les brides 56 et 60 un joint d'étanchéité 62, par exemple de forme torique. La cloison amovible 58 est centrée sur le corps tubulaire 52 par un embrèvement 64 formé entre les brides 56 et 60.

Lorsque le sous-ensemble comprenant le moteur 20, la partie menante 24 de l'arbre d'entraînement, le fourreau 38 et le couvercle-centreur 42 a été démonté, la cloison amovible 58 peut à son tour être démontée à distance, au moyen d'un télémanipulateur. A cet effet, la paroi supérieure de la cloison 58 est munie en son centre et sur sa face supérieure d'un organe de préhension 55.

Au contraire, lorsque la cloison amovible 58 est en place, une barrière d'étanchéité continue formée par la cuve 14, son couvercle 16 et la partie supérieure du boîtier étanche 48 isole complètement du reste de l'installation la partie en contact avec le milieu hostile contenu dans la cuve 14.

La partie menée 26 de l'arbre d'entraînement est supportée de façon tournante par le corps tubulaire 52 du boîtier étanche 48, par l'intermédiaire d'un palier lisse 66, par exemple en céramique.

Dans le mode de réalisation illustré sur la figure 2, le corps tubulaire 52 comprend une partie supérieure de relativement grand diamètre, emboîtée par gravité dans la partie tubulaire 50 et séparée de la partie menée 26 par un espace annulaire 67, et une partie inférieure de relativement petit diamètre, séparée de la partie tubulaire 50 par un espace annulaire 69 et dans laquelle est monté le palier lisse 66.

Ce palier lisse 66 est en contact direct avec la partie menée 26 de l'arbre d'entraînement. Sa lubrification est assurée par le liquide L de la cuve circulant dans une ou plusieurs rainures en hélice 68 formées sur la partie menée 26 et débouchant à chacune des extrémités du palier lisse 66, respectivement au-dessus et en dessous du niveau N du liquide dans la cuve. Le sens d'enroulement des rainures 68 est choisi afin d'assurer la montée par pompage du mélange liquide contenu dans la cuve 14. A son extrémité supérieure, chaque rainure 68 débouche dans l'espace annulaire 67, par exemple au travers de rainures radiales 71 formées dans l'extrémité du palier lisse 66.

Le recyclage du mélange liquide parvenu dans l'espace annulaire 67 est assuré par un ou plusieurs passages 70 formés dans la partie radiale du corps tubulaire 52 joignant la partie supérieure de relativement grand diamètre et la partie inférieure de relativement petit diamètre. Le liquide radioactif ainsi admis dans l'espace annulaire 69 est recyclé dans la cuve par un ou plusieurs passages 72, également formés dans la partie tubulaire 50, en face de cet espace annulaire 69.

Une entretoise 74, équipée à son extrémité inférieure d'un bague de frottement 76, est placée sur la partie menée 26 de l'arbre d'entraînement, entre la pièce massive 36 et le palier lisse 66, afin d'assurer le positionnement en hauteur de la partie menée de l'arbre. Afin d'éviter la remontée de cette partie menée, une entretoise 82 est également placée en dessous du palier lisse 66.

Le boîtier étanche 48 forme, avec la partie menée 26 de l'arbre d'entraînement, et l'agitateur 18 fixé à l'extrémité inférieure de cette partie menée, un deuxième sous-ensemble amovible, qui peut être enlevé après démontage du premier sous-ensemble formé par le moteur 20, la partie menante 24, le fourreau 38 et le couvercle-centreur 42. Pour enlever ce deuxième sous-ensemble, aucun démontage n'est nécessaire puisque le boîtier étanche 48 est simplement posé sur le couvercle 16.

L'enlèvement de ce deuxième sous-ensemble peut donc être réalisé sans difficulté, à distance, au moyen d'un télémanipulateur apte à saisir l'organe de préhension 55 fixé sur la cloison étanche 58.

Il est à noter que ce deuxième sous-ensemble peut aussi être enlevé à distance après un démontage de la cloison étanche 58. En effet, la tête de la vis 37 constitue un organe de préhension apte à être saisi à distance par un télémanipulateur.

Pour permettre le démontage du deuxième sous-ensemble, on observe sur la figure 1 que le diamètre de l'agitateur 18 est inférieur au diamètre du passage 49 formé dans la partie tubulaire 50.

Avantageusement, l'aimant 34 monté sur la pièce massive 36 est recouvert par une tôle de protection 78 dont les bords sont soudés sur la pièce 36. Cette caractéristique permet d'éviter la corrosion de l'aimant par l'acide contenu dans la cuve 14.

De façon comparable, la face apparente de l'aimant 30 peut être recouverte par une tôle de protection 80 dont les bords sont soudés sur la pièce 32.

La description qui précède fait apparaître que l'ensemble de commande selon l'invention permet d'assurer une étanchéité totale de la cuve 14 par rapport au reste de l'installation, en utilisant un mécanisme particulièrement simple et fiable. De plus, le démontage à distance en est relativement aisé et la division en plusieurs sous-ensembles de faible encombrement permet de simplifier le traitement des déchets et le coût d'une intervention.

Bien entendu, l'invention n'est pas limitée au mode de réalisation qui vient d'être décrit à titre d'exemple, mais en couvre toutes les variantes.

Ainsi, en plus des variantes déjà mentionnées dans le cours de la description, on observera qu'au lieu d'être placé au-dessus de la dalle 10, le moteur 20 peut être placé sous cette dernière, immédiatement au-dessus du couvercle-centreur 42. Cette solution a pour avantage de raccourcir sensiblement la longueur de la partie menée de l'arbre d'entraînement, ce qui en facilite le guidage et supprime tout problème de flèche.

Par ailleurs, si l'ensemble de commande selon l'invention est particulièrement adapté pour être utilisé dans un mélangeur-décanteur d'une installation de retraitement de combustible nucléaire, d'autres applications sont possibles, dans tous les cas où le mélangeur brasse des liquides radioactifs.

## Revendications

1. Ensemble de commande d'un agitateur (18), apte à être monté dans une ouverture circulaire (49) d'une cuve (14) contenant un liquide radioactif, cet ensemble comprenant un moteur (20) entraînant en rotation l'agitateur (18) par l'intermédiaire d'un arbre d'entraînement (22) comportant une partie menante (24) et une partie menée (26) reliées par un accouplement magnétique (28), une cloison étanche (58) montée sur la cuve (14) étant interposée entre un organe magnétique menant (30) et un organe magnétique, mené (34) de l'accouplement magnétique caractérisé par le fait que, l'ouverture circulaire ayant un axe vertical, la cloison étanche (58) constitue la partie supérieure d'un boîtier étanche (48) dont un corps inférieur tubulaire (52) repose par simple gravité, de façon étanche, dans ladite ouverture et supporte la partie menée (26) de l'arbre d'entraînement par l'intermédiaire d'un palier (66), de telle sorte qu'après un enlèvement du moteur (20) portant la partie menante (24) de l'arbre d'entraînement, le boîtier étanche (48), supportant la partie menante (24) et l'agitateur (18), peut être extrait par simple soulèvement, au travers de l'ouverture circulaire de la cuve.

2. Ensemble selon la revendication 1, caractérisé par le fait que des moyens (57,59) sont prévus jour empêcher une rotation du boîtier étanche (48) dans ladite ouverture (49).

3. Ensemble selon l'une quelconque des revendications 1 et 2, caractérisé par le fait que l'ouverture circulaire (49) est formée dans une partie tubulaire (50) de la cuve (14), qui fait saillie vers le bas jusqu'en dessous d'un niveau (N) du liquide radioactif contenu dans la cuve, ledit palier étant un palier lisse (66) lubrifié par ledit liquide, qui circule de bas en haut dans au moins une rainure hélicoïdale (68) formée de part et d'autre du niveau (N) à la surface de la partie menée de l'arbre d'entraînement.

4. Ensemble selon la revendication 3, caractérisé par le fait que la rainure hélicoïdale (68) débouche à son extrémité supérieure dans un espace annulaire formé entre la partie menée (26) de l'arbre et le corps inférieur tubulaire (52) du boîtier étanche (48), ledit espace annulaire communiquant avec la cuve par des passages (70,72) formés dans le corps inférieur tubulaire (52) du boîtier et dans la partie tubulaire (50) de la cuve, en dessous de moyens d'étanchéité (54) prévus entre le corps (52) et la partie tubulaire (50).

5. Ensemble selon l'une quelconque des revendications précédentes, caractérisé par le fait que la partie menante de l'arbre d'entraînement est montée rotative dans un fourreau (38) lié à un couvercle-centreur (42) reçu dans une virole de centrage (44) qui fait saillie au-dessus de la cuve, autour de l'arbre d'entraînement.

6. Ensemble selon la revendication 5, caractérisé par le fait que le moteur (20) est placé immédiatement au-dessus du couvercle-centreur (42), en dessous d'une dalle (10) de protection biologique surplombant la cuve de l'agitateur.

7. Ensemble selon l'une quelconque des revendications 1 à 6, caractérisé par le fait que le moteur (20) est placé au-dessus d'une dalle (10) de protection biologique surplombant la cuve de l'agitateur.

8. Ensemble selon l'une quelconque des revendications précédentes, caractérisé par le fait que la cloison étanche (58) est fixée de façon amovible sur le corps tubulaire du boîtier étanche, par l'intermédiaire d'au moins un organe d'étanchéité (60) et de moyens de centrage (64).

9. Ensemble selon l'une quelconque des revendications précédentes, caractérisé par le fait que l'organe magnétique mené est un aimant (34) recouvert par une tôle de protection (78) soudée sur un support solidaire de la partie menée de l'arbre de transmission.

## Patentansprüche

1. Steuervorrichtung für einen Rührer (18), der in einer Kreisöffnung (49) eines Behälters (14) angebracht werden kann, der eine radioaktive Flüssigkeit enthält, wobei diese Vorrichtung umfaßt einen Motor (20), der den Rührer (18) über eine Antriebswelle (22) drehantreibt, die einen treibenden Teil (24) und einen getriebenen Teil (26) aufweist, die durch eine Magnetkupplung (28) verbunden sind, eine dichte Wand (58), die an dem Behälter (14) angebracht und zwischen einem magnetischen treibenden Organ (30) und einem magnetischen, getriebenen Organ (34) der Magnetkupplung angeordnet ist, dadurch gekennzeichnet, daß die kreisförmige Öffnung eine vertikale Achse hat, die dichte Wand (58) den oberen Teil eines dichten Gehäuses (48) bildet, von dem ein unterer, rohrförmiger Körper (52) nur durch das Eigengewicht in dichter Weise in der genannten Öffnung ruht und den getriebenen Teil (26) der Antriebswelle mittels eines Lagers (66) derart hält, daß nach dem Entfernen des Motors (20), der den getriebenen Teil (24) der Antriebswelle trägt, das dichte Gehäuse (48), das den getriebenen Teil (24) und den Rührer (18) hält, durch einfaches Anheben quer durch die kreisförmige Öffnung des Behälters herausgezogen werden kann.

2. Vorrichtung nach Anspruch 1, dadurch gekennzeichnet, daß Einrichtungen (57, 59) vorgesehen sind, um eine Drehung des dichten Gehäuses (48) in der genannten Öffnung (49) zu verhindern.

3. Vorrichtung gemäß irgendeinem der Ansprüche 1 und 2, dadurch gekennzeichnet, daß die kreisförmige Öffnung (49) in einem rohrförmigen Teil (50) des Behälters (14) ausgebildet ist, der nach unten bis unterhalb eines Pegels (N) der in dem Behälter enthaltenen, radioaktiven Flüssigkeit vorsteht, wobei das genannte Lager ein Gleitlager (66) ist, das durch die genannte Flüssigkeit geschmiert wird, die von unten nach oben in wenigstens einer schraubenförmigen Rille (68) umläuft, die beidseitig des Pegels (N) auf der Oberfläche des getriebenen Teils der Antriebswelle gebildet ist.

4. Vorrichtung gemäß Anspruch 3, dadurch gekennzeichnet, daß die schraubenförmige Rille (68) an ihrem oberen Ende in einen Ringraum mündet, der zwischen dem getriebenen Teil (26) der Welle und dem unteren, rohrförmigen Körper (52) des dichten Gehäuses (48) gebildet ist, wobei der genannte Ringraum mit dem Behälter über Durchlässe (70, 72) in Verbindung steht, die in dem unteren, rohrförmigen Körper (52) des Gehäuses und in dem rohrförmigen Teil (50) des Behälters unterhalb von Abdichtungseinrichtungen (54) gebildet sind, die zwischen dem Körper (52) und dem rohrförmigen Teil (50) vorgesehen sind.

5. Vorrichtung gemäß irgendeinem der vorhergehenden Ansprüche, dadurch gekennzeichnet, daß der treibende Teil der Antriebswelle in einer Buchse (38) drehgelagert ist, die mit einer Deckelzentrierungseinrichtung (42) verbunden ist, die von einem Zentrierungsring (44) aufgenommen wird, der nach oberhalb des Behälters um die Antriebswelle herum vorspringt.

6. Vorrichtung gemäß Anspruch 5, dadurch gekennzeichnet, daß der Motor (20) unmittelbar über der Deckelzentriereinrichtung (42) unterhalb der Decke (10) zum Hohlraumschutz angeordnet ist, die den Behälter des Rührers überdeckt.

7. Vorrichtung gemäß irgendeinem der Ansprüche 1 bis 6, dadurch gekennzeichnet, daß der Motor (20) oberhalb einer Decke (10) für den Hohlraumschutz angeordnet ist, der den Behälter des Rührers überdeckt.

8. Vorrichtung gemäß irgendeinem der vorhergehenden Ansprüche, dadurch gekennzeichnet, daß die dichte Wand (58) an dem rohrförmigen Körper des dichten Gehäuses mittels wenigstens eines Abdichtungsorgans (60) und Zentrierungseinrichtungen (64) lösbar befestigt ist.

9. Vorrichtung gemäß irgendeinem der vorhergehenden Ansprüche, dadurch gekennzeichnet, daß das magnetische, getriebene Organ ein Magnet (34) ist, der mit einem Schutzblech (78) überdeckt ist, das an einer Stütze angeschweißt ist, die mit dem getriebenen Teil der Antriebswelle fest verbunden ist.

## Claims

1. Stirrer control assembly (18) which can be installed in a circular opening (49) of a vessel (14) containing a radioactive liquid, said assembly having a motor (20) rotating the stirrer (18) via a drive shaft (22) having a driving part (24) and a driven part (26) connected by a magnetic coupling (28), a tight partition (58) mounted on the vessel (14) being interposed between a driving magnetic member (30) and a driven magnetic member (34) of the magnetic coupling, characterized in that, as the circular opening has a vertical axis, the tight partition (58) constitutes the upper part of a sealed housing (48), whereof a lower tubular body (52) rests tightly by gravity in the said opening and supports the driven part (26) of the drive shaft via a bearing (66), in such a way that after the removal of the motor (20) carrying the driving part (24) of the drive shaft, the sealed housing (48) supporting the driving part (24) and the stirrer (18) can be extracted by simply raising through the circular opening of the vessel.

2. Assembly according to claim 1, characterized in that means (57, 59) are provided for preventing any rotation of the sealed housing (48) in the said opening (49).

3. Assembly according to either of the claims 1 and 2, characterized in that the circular opening (49) is formed in a tubular portion (50) of the vessel (14), which projects domnwards to below a level (N) of the radioactive liquid contained in the vessel, said bearing being a journal bearing (66) lubricated by the said liquid, which flows from bottom to top in at least one helical groove (68) formed on either side of the level (N) on the surface of the driven part of the drive shaft.

4. Assembly according to claim 3, characterized in that the helical groove (68) issues at its upper end into an annular space formed between the driven part (26) of the shaft and the lower tubular body (52) of the sealed housing (48), said annular space communicating with the vessel by passages (70, 72) formed in the lower tubular body (52) of the housing and in the tubular portion (50) of the vessel below sealing means (54) provided between the body (52) and the tubular portion (50).

5. Assembly according to any one of the preceding claims, characterized in that the driving part of the drive shaft is mounted so as to rotate in a sleeve (38) connected to a centring cover (42) received in a centring ferrule (44), which projects above the vessel around the drive shaft.

6. Assembly according to claim 5, characterized in that the motor (20) is placed immediately above the centring cover (42), below a biological protection slab (20) overhanging the stirrer vessel.

7. Assembly according to any one of the claims 1 to 6, characterized in that the motor (20) is placed above a biological protection slab (10) projecting over the stirrer vessel.

8. Assembly according to any one of the preceding claims, characterized in that the tight partition (58) is detachably fixed to the tubular body of the sealed housing, via at least one sealing member (60) and centring means (64).

9. Assembly according to any one of the preceding claims, characterized in that the driven magnetic member is a magnet (34) covered by a protective sheet (78) welded to an integral support of the driven part of the drive shaft.
